Europäisches Patentamt

(19) European Patent Office

Office européen des brevets

(11) EP 0 493 619 B1

## (12) EUROPEAN PATENT SPECIFICATION

(45) Date of publication and mention
of the grant of the patent:
**16.04.1997 Bulletin 1997/16**

(21) Application number: **91913090.6**

(22) Date of filing: **23.07.1991**

(51) Int. Cl.⁶: **B29C 45/76**

(86) International application number:
**PCT/JP91/00977**

(87) International publication number:
**WO 92/01547 (06.02.1992 Gazette 1992/04)**

(54) **METHOD OF DETECTING ABNORMAL FILLING IN INJECTION MOLDING MACHINE**

VERFAHREN ZUM FESTSTELLEN EINES ABNORMALEN FÜLLENS BEI EINER
SPRITZGIESSMASCHINE

PROCEDE DE DETECTION D'UN REMPLISSAGE ANORMAL DANS UNE MACHINE DE
MOULAGE PAR INJECTION

(84) Designated Contracting States:
**DE FR GB IT**

(30) Priority: **24.07.1990 JP 195962/90**

(43) Date of publication of application:
**08.07.1992 Bulletin 1992/28**

(73) Proprietor: **KOMATSU LTD.**
**Minato-ku Tokyo 107 (JP)**

(72) Inventor: **YOKOTA, Akira,**
**Komatsu Ltd.**
**Plastic Division**
**Osaka 573 (JP)**

(74) Representative: **Tiedtke, Harro, Dipl.-Ing. et al**
**Patentanwaltsbüro**
**Tiedtke-Bühling-Kinne & Partner**
**Bavariaring 4**
**80336 München (DE)**

(56) References cited:
EP-A- 0 260 328          FR-A- 2 380 865
JP-A-58 147 326          JP-B- 5 936 859

• PATENT ABSTRACTS OF JAPAN vol. 9, no. 231
(M-414)(1954) 18 September 1985 & JP-A-60 087
030 (MATSUSHITA DENKI SANGYO KK) 16 May
1985
• PATENT ABSTRACTS OF JAPAN vol. 14, no. 266
(M-982)(4209) 8 June 1990 & JP-A-2 078 516
(FANUC LTD) 19 March 1990
• PATENT ABSTRACTS OF JAPAN vol. 13, no. 446
(M-887)(3794) 6 October 1989 & JP-A-1 171 830
(JAPAN STEEL WORKS LTD) 6 July 1989
• PATENT ABSTRACTS OF JAPAN vol. 13, no. 204
(M-825)(3552) 15 May 1989 & JP-A-1 026 424
(SHIKOKU MARUYASU K.K.) 27 January 1989

# Description

## Technical Field

The present invention relates to an abnormal filling detection method for an injection molding apparatus, wherein abnormalities in filling with plasticized synthetic resinous material which occur at the side of the screw and/or the mold during the holding process of the continuous production of molded articles.

## Background Art

In order to improve the quality of molded articles in continuous injection molding of plasticized synthetic resinous material with the use of an injection molding apparatus, it is essential to fill a mold cavity with exactly a predetermined amount of plasticized synthetic resinous material. There are required two primary factors in filling a mold cavity with exactly a predetermined amount of plasticized synthetic resinous material: One is a method for controlling the operation of the screw at each phase of a molding cycle. The other is the performance of the back flow preventing means which is provided at the forward end of the screw and functions to prevent the back flow of the plasticized synthetic resinous material from the forward side of the screw during the time the screw is travelling forward. In the event of the occurrence of such a back flow of the plasticized synthetic resinous material, it will become extremely difficult to maintain the plasticized synthetic resinous material to be filled into the mold cavity at a constant amount unless the amount of the back flow of the plasticized synthetic resinous material is constant.

In a typical conventional injection molding, the filling process of a mold cavity with plasticized synthetic resinous material is composed of two processes, an injection process and a holding process. The injection process is a process for controlling the speed of filling a mold cavity with plasticized synthetic resinous material and, more specifically, is a speed control process in which the filling speed is controlled by detecting a position of the screw. The holding process, on the other hand, is a pressure control process in which pressure is additionally applied to the screw for compensating for the shrinkage of the resin due to the cooling and solidification of the plasticized synthetic resinous material in the mold cavity, so that the mold cavity is replenished with the plasticized synthetic resinous material up to its gate seal point. In the holding process, the travelling speed of the screw is very low and is therefore time-controlled by a holding pressure timer. Further, the filling process composed of the injection process and the holding process is monitored throughout using a filling timer which is provided independently from the above-mentioned holding pressure timer. Therefore, the filling process is controlled such that the time required for the filling process can be kept at a given time and fluctuations in the temperature of the mold and the heating cycle, which are caused by fluctuations in the molding cycle, can be prevented. Particularly, it is possible to maintain the molding cycle constant without causing a change in the time required for the injection and holding processes, even in the case the filling speed is altered when setting molding conditions at the preliminary stage of the mass production.

In the filling process thus controlled, the amount of the plasticized synthetic resinous material to be filled into the mold cavity is detected and controlled by monitoring the time required for the screw to travel a specified distance in the injection process where the speed control is carried out, and by monitoring the filling process composed of the injection process and the holding process throughout to obtain the screw position (i.e., cushion amount) upon completion of the holding process, or the travelling distance of the screw.

In the case the injection process is controlled by monitoring the travelling time of the screw as mentioned above, in the event that the back flow of the plasticized synthetic resinous material occurs owing to the malfunction of the back flow preventing means resulting from the inclusion of foreign materials, wear or the like, an abnormal filling cannot be detected in the filling process as far as the screw keeps travelling at a given speed. However, it is possible to detect the malfunction of the back flow preventing means either by detecting the screw position upon completion of the holding process or by detecting the travelling distance of the screw during the injection and holding processes. Specifically, these two processes are monitored and controlled throughout by means of the filling timer, and when the amount of the back flow is large during these processes, the cushion amount will decrease and the travelling distance of the screw will increase. This makes it possible to detect the abnormal filling due to the malfunction of the back flow preventing means by comparing the screw position upon completion of the injection and holding processes with a reference screw position which should be reached by the screw when the filling is normally performed.

In such a conventional control method for the filling process, there are a number of problems with setting a specified amount value for the amount of the plasticized synthetic resinous material to be filled into the mold cavity. To avoid those problems, there have been proposed control methods which are carried out on the basis of a specified travelling distance, examples of which being described as follows:

(1) Control method in which spring back amount is taken into account.

In the injection process, it is required that the injection pressure be high enough to overcome the resistance at the sprue runners and the gate of the mold. However, the resin pressure within the mold cavity increases as the filling with plasticized synthetic resinous material proceeds. If high injection pressure is continued, excessive pressure will act on the mold, resulting in flash or over-packing. In order to avoid such undesirable results, it is necessary to reduce a pressure applied from the back of the screw just before the completion of the injection so as to be switched to a holding force which is just large enough to compensate for the shrinkage of the plasticized synthetic resinous material in the mold cavity. When this pressure is lowered, the compressed plasticized synthetic resinous material recovers because of its elastic force, causing the screw to temporarily retreat. This is called "spring back". The screw is then moved forwards again with the help of the holding force and the holding process is then completed. In the case such "spring back" takes place, if the pressure applied from the back of the screw positioned at its target position is reduced, the amount of the plasticized synthetic resinous material to be filled into the mold cavity will become less than the target value. It is therefore necessary to reduce the pressure applied from the back of the screw at an appropriate position which has been set taking the amount of "spring back" into account.

When the screw travels, in the injection process, towards a screw position ($S_{MAX}$) which has been set taking the "spring back" amount into account, the screw first reaches, in the course of the injection process, a target screw position ($S_T$) at which the target filling amount of the plasticized synthetic resinous material is achieved by the screw. In order to avoid such a misunderstanding that the injection is completed at the moment the screw has passed the target screw position ($S_T$) in the course of the injection process, the following control method, for example, is adopted: The travelling amount of the screw is not monitored during a preset period from when the screw reaches the screw position ($S_{MAX}$) which has been set in consideration of the "spring back" amount until the "spring back" is presumably completed. After an elapse of the preset period, monitoring of the travelling distance of the screw is started, and at the moment the screw has reached the target screw position ($S_T$), the holding process is completed. In such a control method, it is necessary to preset a screw position at which the holding process is completed.
(2) Control method carried out on the basis of a characteristic value of plasticized synthetic resinous material.

Prior to the filling process in which the mold cavity is filled with plasticized synthetic resinous material, a measuring process is invariably carried out, in which a predetermined amount of plasticized synthetic resinous material is supplied to a heated cylinder while the resinous material being melted and plasticized. The screw position at which the measuring process is completed is the starting point for the screw to start its travelling for the filling operation. Therefore, in the case the position where the above measuring is carried out changes or is changed, even if the operation is switched to the holding process by moving the screw a specified distance and the screw position after completion of the injection and holding is obtained, it is merely possible to regulate the volume of the plasticized synthetic resinous material to be filled in during the period it travels from the above starting point to the injection/holding completion point, as long as the plasticized synthetic resinous material existing ahead of the forward end of the screw has compressibility. Therefore, the weight of the plasticized synthetic resinous material to be filled in the mold cavity is not constant. To overcome the above problem, this method is arranged such that a relation between resin pressure; resin specific volume; and resin temperature is used as a characteristic value of the plasticized synthetic resinous material, and the screw position, with which the weight of the plasticized synthetic resinous material to be filled in is constantly maintained, is obtained by arithmetic operation, whereby the movement of the screw is controlled.

In the two control methods described above, since the screw position upon completion of the holding is preset or obtained beforehand by arithmetic calculation, it is impossible to detect abnormal filling with plasticized synthetic resinous material by detecting the malfunction of the back flow preventing means from the distance the screw travels within a specified time period as mentioned above. Further, in such conventional control methods, the injection time and holding time are set a little longer taking the fluctuation of the gate sealing time into account in order to ensure uniform product quality. However, the solidifying condition of each molded article often varies at the gate thereof owing to changes in the cooling conditions of the gate and the cavity, particularly when a multi-cavity mold is used. In this case, even if the detected values obtained from monitoring the travelling distance of the screw or cushion amount are constant, it cannot be assured that there are no abnormalities in the amount of the plasticized synthetic resinous material filled in each cavity but it can be only judged that the total amount of the plasticized synthetic resinous material filled in the cavities is constant. It is therefore very difficult in the conventional control methods, in which the travelling distance of the screw or cushion amount is monitored, to detect abnormalities in the filling amount of the plasticized synthetic resinous material when a multi-cavity mold is used.

A further conventional method is described in FR-A-2 380 865, which comprises a measurement of the time required by the screw for moving a predetermined distance, in order to detect any malfunction in the molding process. The time measurement is restricted to the movement of the screw during the injection, so that this known method suffers from the fact that a malfunction during the holding cycle of the screw is not detectable.

In consideration of the foregoing problems, the present invention aims to provide an abnormal filling detection method for an injection molding apparatus, by which the malfunction of the back flow preventing means can be detected even in the molding process in which the travelling distance of the screw has been preset, and by which abnormalities in the filling amount of the plasticized synthetic resinous material can be detected even when a multi-cavity mold is used.

DISCLOSURE OF THE INVENTION

The object is solved with a detection method according to claim 1.

In the event that there occurs a malfunction of the back flow preventing means, allowing the back flow of plasticized synthetic resinous material during the time the screw travels forwards in the holding process, part of the plasticized synthetic resinous material to be filled from the cylinder into the mold cavity flows backwards with the result that the screw travels faster than it does when filling is normally performed. Accordingly, the actual holding time obtained by measurement becomes shorter than that in the case of normal filling. Further, when using a multi-cavity mold, if the timing Of gate sealing for each cavity and the heating cycle of the mold are stable, the filling resistance in the holding process of each molding cycle is constant. However, if there occur any abnormalities in the mold causing a change in the filling resistance of the plasticized synthetic resinous material, the time required for the screw to travel a specified distance (i.e., holding time) will vary. More concretely, if the mold is chipped off or the viscosity of the plasticized synthetic resinous material decreases because of a rise in the temperature of the mold, the filling resistance of the plasticized synthetic resinous material will decrease with the result that the actual pressure time obtained by measurement is shorter than that in the case of normal filling. On the other hand, if part of the gate section is clogged with foreign materials or the viscosity of the plasticized synthetic resinous material increases because of a drop in the temperature of the mold, the filling resistance of the plasticized synthetic resinous material will increase with the result that the actual holding time obtained by measurement is longer than that in the case of normal filling.

Accordingly, it is possible to detect the occurrence of filling abnormalities in the back flow preventing means and/or in the mold and to issue an abnormality occurrence signal, by the method of claim 1

BRIEF DESCRIPTION OF THE DRAWINGS

The invention will now be described by way of example with reference to the accompanying drawings which illustrate the preferred embodiment of an abnormal filling detection method for an injection molding apparatus according to the invention, in which:

Fig. 1 is a semi diagrammatical vertical sectional view of an injection molding apparatus and a mold;

Fig. 2 is a vertical section of a check valve;

Fig. 3 diagrammatically shows the positions of a screw during the period it travels from the start of injection until the completion of holding; and

Fig. 4 is a flow chart explaining an abnormal filling detection method for the injection molding apparatus.

BEST MODE FOR CARRYING OUT THE INVENTION

With reference to the drawings, one embodiment of an abnormal filling detection method for an injection molding apparatus according to the invention will be explained.

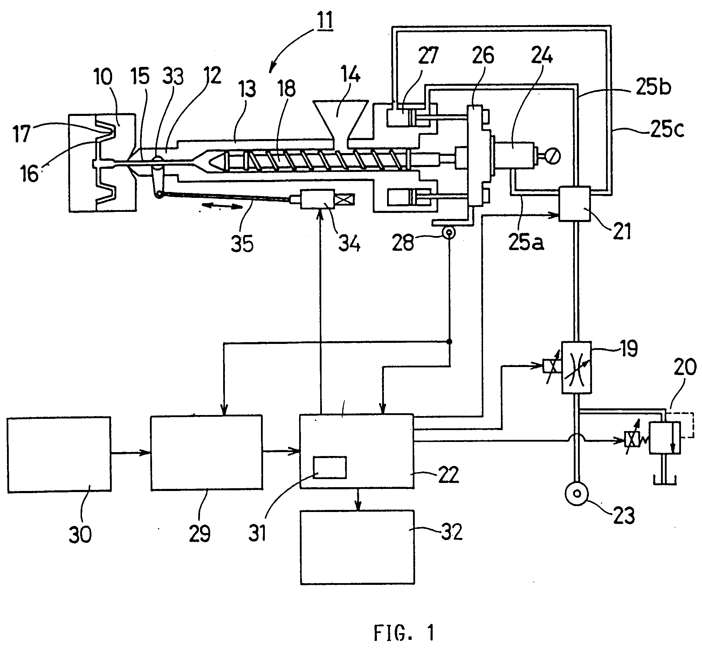

Reference is first made to Fig. 1 which schematically illustrates the whole structure of an injection molding apparatus 11. The injection molding apparatus 11 is connected to a mold 10 for producing injection molded articles at a nozzle section 12 thereof. The injection molding apparatus 11 has a screw 18 housed in a cylinder 13 thereof. By means of the screw 18, pellets of plasticized synthetic resinous material supplied from a hopper 14 are melted, mixed and kneaded while the melted and plasticized resin being measured, and then injected into a cavity 17 of the mold 10 through a flow path 15 which pierces the nozzle section 12 and through a gate section 16 of the mold 10. The rotation of the screw 18 for melting and mixing etc. of the resinous material pellets is performed by supplying hydraulic oil from a hydraulic source 23 through a fluid line 25a to a screw driving motor 24 and exhausting the hydraulic oil in the opposite way. The supply and exhaust of hydraulic oil is executed by controlling an electromagnetic flow valve 19, an electromagnetic pressure valve 20 and a switching valve 21 with a control unit 22. The screw 18 and the screw driving motor 24 are fixed to a base board 26 which is driven from the right to the left and vice versa in the figure by supplying hydraulic oil from the hydraulic source 23 through fluid lines 25b and 25c to a hydraulic piston system 27 and exhausting the hydraulic oil in the opposite way. This supply and exhaust of hydraulic oil is also executed by controlling the electromagnetic flow valve 19, the electromagnetic pressure valve 20 and the switching valve 21 with the control unit 22. More specifically, the forward and backward movements of the screw 18 with respect to the nozzle section 12 which are carried out in order to measure the plasticized synthetic resinous material to be injected and to inject the measured plasticized synthetic resinous material into the cavity 17 of the mold 10, as well as the application of a specified pressure to the screw 18 in order to impart a specified pressure to the plasticized synthetic resinous material in the cylinder 13 are performed via the base board 26 by the supply and exhaust of hydraulic oil to and from the hydraulic piston system 27. The base board 26 has a screw position detector 28 engaged therewith in order to detect the positional value of the screw 18. The positional value of the screw 18 detected by the screw position detector 28 is sent to the control unit 22 and an arithmetic unit 29 for executing various arithmetic operations.

A reference holding time input to the arithmetic unit 29 via an external input device 30 is compared with an actual holding time measured by a timer 31 provided in the control unit 22, and then the presence/absence of abnormalities in the filling with the plasticized synthetic resinous material is indicated on a display unit 32 upon receipt of information from the control unit 22. In case abnormalities are found, the control unit 22 outputs an abnormality occurrence signal so that specified measures can be taken afterwards.

The flow path 15 of the nozzle section 12 is provided with a blocking valve 33 for shutting a flow of the melted and plasticized synthetic resinous material off. The opening and closing of the blocking valve 33 is carried out through a control lever 35 by controlling an electromagnetic driving unit 34.

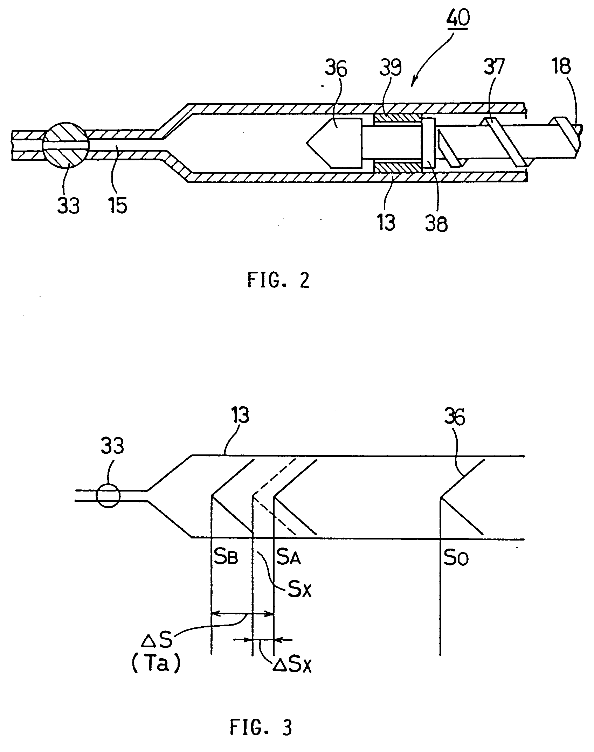

As shown in Fig. 2, a ring sliding valve element 39 is so seated between a conical tip portion 36 of the screw 18 and a projected flange portion 38 located at one end of a spiral thread portion 37 that it is axially movable. When the resin pressure of the plasticized synthetic resinous material at the tip portion side of the screw 18 (i.e., at the left hand in the figure) increases, the ring sliding valve element 39 comes in pressure contact with the projected flange portion 38, preventing the back flow of the plasticized synthetic resinous material toward the right hand in the figure. The projected flange portion 38 and the ring sliding valve element 39 constitute a check valve 40 which serves as back flow preventing means.

In the holding process of the molding process with the use of the above-described injection molding apparatus 11, in the event that the check valve 40 fails to prevent the back flow of the plasticized synthetic resinous material owing to the inclusion of foreign materials, wear etc., part of the plasticized synthetic resinous material in the cylinder 13 to be pushed and forced into the cavity 17 by the forward movement of the screw 18 flows backwards. As a result, the screw 18 moves faster than it does when filling is normally carried out, and the actual holding time obtained by measurement accordingly becomes shorter than that in the case of normal filling. When using a multi-cavity mold 10, if the timing of gate sealing for each cavity 17 and the heating cycle of the mold 10 are stable, the filling pressure in the holding process of each molding cycle is constant. However, if there occur any abnormalities in the mold 10, the time required for the screw 18 to travel a specified distance (i.e., holding time) will be changed. That is, if the gate section 16 of the mold 10 is chipped off, or the viscosity of the plasticized synthetic resinous material decreases because of a rise in the temperature of the mold 10, the filling resistance of the plasticized synthetic resinous material will decrease with the actual holding time shorter than that when filling is normally carried out. On the other hand, if part of the gate section 16 of the multi-cavity mold 10 is clogged with foreign materials, or the viscosity of the plasticized synthetic resinous material increases because of a drop in the temperature of the mold 10, the filling resistance of the plasticized synthetic resinous material increases with the actual holding time being longer than that when filling is normally carried out.

It is therefore possible to detect abnormalities in the check valve 40 and the mold 10 by measuring the time required for the screw 18 to travel a specified distance during the holding process (i.e., holding time) and comparing the actual holding time thus measured with a reference holding time having a specified allowable range.

Next, a method for detecting abnormalities in the check valve 40 and the mold 10 in the molding process controlled by a specified travelling distance of the screw 18 will be explained. In this embodiment, abnormalities in the check valve 40 and the mold 10 are detected by measuring the time required for the screw 18 to travel from the injection-holding switching point to the holding completion point, i.e., the time required for the holding process, and judging whether or not the actual holding time thus measured is within the allowable range of the reference holding time.

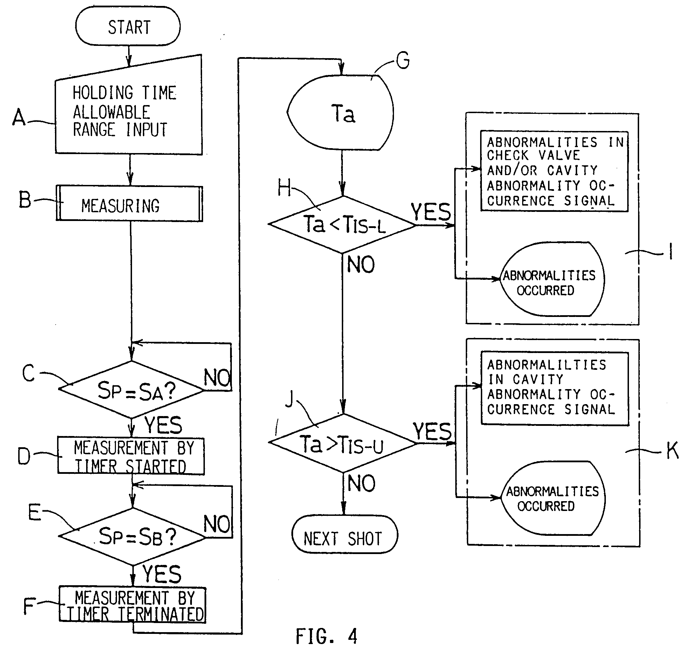

With reference to Fig. 3 in which screw positions are diagrammatically shown and the flow chart of Fig. 4, the above-described abnormal filling detection method will be explained.

A: An upper limit $T_{IS-U}$ and a lower limit $T_{IS-L}$ of the reference holding time are input by the external input device 30.

B: With the blocking valve 33 being closed to prevent the flow of the plasticized synthetic resinous material, a specified amount of the plasticized synthetic resinous material is measured. A positional value $S_O$ of the screw 18 upon completion of the measuring corresponds to an injection starting point.

C: With the blocking valve 33 being opened to allow the flow of the plasticized synthetic resinous material, a specified pressure is applied to the screw 18, so that the screw 18 moves forwards to inject the plasticized synthetic resinous material into the cavity 17, and a positional value $S_P$ of the screw 18 is detected by the screw position detector 28. Injection is continued until the screw 18 reaches an injection-holding switching positional value $S_A$, that is, until the equation $S_P = S_A$ holds.

D: At the moment the screw 18 has reached the injection-holding switching positional value $S_A$, the pressure applied to the screw 18 is switched to a holding force, and the timer 31 starts its measuring operation.

E: The screw 18 is slightly moved a specified distance $\Delta S$ by the holding force, and the holding process continues until the positional value $S_P$ of the screw 18 detected by the screw position detector 28 becomes coincident with a holding completion positional value $S_B$.

F: Upon completion of the holding process, the timer 31 completes its measuring operation to obtain an actual holding time $T_a$, and the blocking valve 33 is closed to prevent the flow of the plasticized synthetic resinous material into the cavity 17.

G: The actual holding time $T_a$ is displayed on the display unit 32.

H: The actual holding time $T_a$ is compared with the lower limit $T_{IS-L}$ of the reference holding time. If the actual holding time $T_a$ is shorter than the lower limit $T_{IS-L}$, Step I is entered and if not, Step J is entered.

I: Judging that there have occurred abnormalities in the check valve 40 and/or the cavity 17, an abnormality occurrence signal is issued and a specified procedure is taken. In the meantime, the occurrence of abnormalities is indicated on the display unit 32.

J: The actual holding time $T_a$ is compared with the upper limit $T_{IS-U}$ of the reference holding time. If the actual holding time $T_a$ exceeds the upper limit $T_{IS-U}$, Step K is entered and if not, the molded article is regarded as an acceptable product and the following "shot" is then carried out.

K: Judging that there have occurred abnormalities in the cavity 17, an abnormality occurrence signal is issued and a specified procedure is taken. In the meantime, the occurrence of abnormalities is indicated on the display unit 32.

In the event that abnormalities are detected in the above Steps I and K, an appropriate procedure such as judging whether the molded article is an acceptable product or unacceptable product, or suspending the operation of the injection molding apparatus 11 is taken upon receipt of the output of an abnormality occurrence signal.

Since the injection process is a speed control process as mentioned above, and the filling speed of the plasticized synthetic resinous material is maintained at a specified value during the time the screw 18 travels from the injection start positional value $S_O$ to the injection-holding switching positional value $S_A$, the travelling time of the screw 18 during this period is constant. Therefore, even if the measuring operation by the timer 31 is commenced at the time the screw 18 is positioned at the injection start positional value $S_O$, the same effect as when the measuring operation is commenced at the time the screw 18 is positioned at the injection-holding switching positional value $S_A$, as has been described in this embodiment, can be obtained. Further, the measuring operation is terminated at the time the screw 18 has reached the holding completion positional value $S_B$ in this embodiment, but the measuring may be terminated at the time the screw 18 is positioned at the positional value $S_X$ as indicated by the dotted line in Fig. 3, the positional value $S_X$ being passed by the screw 18 when it travels a specified distance $\Delta S_X$ from the injection-holding switching positional value $S_A$ to the holding completion positional value $S_B$. With the arrangement in which the measuring operation is terminated at the positional value $S_X$, the point passed by the screw 18 before reaching the holding completion point can be obtained by experience and therefore this invention can be adopted in conventionally known molding process control methods in which the holding process is controlled by the holding time.

Further, in the abnormal filling detection method in the above embodiment, the injection molding apparatus 11 having the blocking valve 33 is used, but an injection molding apparatus which does not have the blocking valve 33 may be used instead to detect abnormal filling because the arrangement in which the measuring operation is terminated at the screw positional value $S_X$ enables the invention to be applied to conventional injection process control methods, that is, to injection process control methods employing an injection molding apparatus which does not have the blocking valve 33.

## INDUSTRIAL APPLICABILITY

According to the invention, abnormalities in filling with plasticized synthetic resinous material, which may occur at the side of the screw and/or the mold during the holding process, can be detected in the molding process controlled by the travelling distance of the screw. Accordingly, the abnormal filling detection method for an injection molding apparatus of the invention is particularly suited for the molding process which is controlled by the travelling distance of the screw for the purpose of filling exactly a specified amount of plasticized synthetic resinous material into the mold cavity to produce high quality molded articles.

## Claims

1. An abnormal filling detection method for an injection molding apparatus (11), in which a molding process is controlled by measuring the time required by a screw (18) for travelling a predetermined distance, and in which an abnormality occurence signal is issued in case the time ($T_a$) thus measured lies outside a specified allowable range ($T_{IS-L}$, $T_{IS-U}$),
   **characterized by** the step of

   measuring the time ($T_a$) required for the screw (18) to travel a specified distance ($\Delta S_X$), including at least part of a holding process, from an injection starting point ($S_O$) via an injection-holding switching point ($S_A$) to a holding completion point ($S_B$).

2. The abnormal filling detection method according to claim 1, wherein the time measurement is commenced at the time the screw (18) is positioned at the injection-holding switching point ($S_A$) and is terminated at the time the screw (18) has reached the holding completion point ($S_B$).

3. The abnormal filling detection method according to claim 1, wherein the time measurement is commenced at the time the screw (18) is positioned at the injection starting point ($S_O$) and is terminated at the time the screw (18) has reached the holding completion point ($S_B$).

4. The abnormal filling detection method according to claim 1, wherein the time measurement is commenced at the time the screw (18) is positioned at the injection-holding switching point ($S_A$) and is terminated at the time the screw (18) has reached a predetermined point ($S_X$) between the injection-holding switching point ($S_A$) and the holding completion point ($S_B$).

5. The abnormal filling detection method according to claim 1, wherein the time measurement is commenced at the time the screw (18) is positioned at the injection starting point ($S_O$) and is terminated at the time the screw (18) has reached a predetermined point ($S_X$) between the injection-holding switching point ($S_A$) and the holding completion point ($S_B$).

**Patentansprüche**

1. Verfahren zum Feststellen eines abnormalen Füllens bei einer Spritzgießmaschine (11), bei dem ein Gießvorgang gesteuert wird, indem die Zeit gemessen wird, die eine Schnecke (18) benötigt, um eine bestimmte Strecke zurückzulegen, und bei dem ein Signal für das Auftreten einer Abnormalität in dem Fall herausgegeben wird, wenn die so gemessene Zeit ($T_a$) außerhalb eines spezifizierten zulässigen Bereichs ($T_{IS-L}$, $T_{IS-U}$) liegt, **gekennzeichnet durch** den Schritt des Messens der von der Schnecke (18) benötigten Zeit ($T_a$), um eine vorbestimmte Strecke ($\Delta S_X$) inklusive mindestens eines Teils eines Haltevorgangs zurückzulegen, von einem Einspritz-Startpunkt ($S_O$) über einen Einspritz-Halte-Schaltpunkt ($S_A$) zu einem Halte-Endpunkt ($S_B$).

2. Verfahren zum Feststellen eines abnormalen Füllens nach Anspruch 1, wobei die Zeitmessung zu der Zeit begonnen wird, zu der die Schnecke (18) am Einspritz-Halte-Schaltpunkt ($S_A$) positioniert ist, und zu einer Zeit beendet wird, in der die Schnecke (18) den Halte-Endpunkt ($S_B$) erreicht hat.

3. Verfahren zum Feststellen eines abnormalen Füllens nach Anspruch 1, wobei die Zeitmessung zu der Zeit begonnen wird, zu der die Schnecke (18) am Einspritz-Startpunkt ($S_O$) positioniert ist, und zu einer Zeit beendet wird, in der die Schnecke (18) den Halte-Endpunkt ($S_B$) erreicht hat.

4. Verfahren zum Feststellen eines abnormalen Füllens nach Anspruch 1, wobei die Zeitmessung zu der Zeit begonnen wird, zu der die Schnecke (18) am Einspritz-Halte-Schaltpunkt ($S_A$) positioniert ist, und zu einer Zeit beendet wird, in der die Schnecke (18) einen vorbestimmten Punkt ($S_X$) zwischen dem Einspritz-Halte-Schaltpunkt ($S_A$) und dem Halte-Endpunkt ($S_B$) erreicht hat.

5. Verfahren zum Feststellen eines abnormalen Füllens nach Anspruch 1, wobei die Zeitmessung zu der Zeit begonnen wird, zu der die Schnecke (18) am Einspritz-Startpunkt ($S_O$) positioniert ist, und zu einer Zeit beendet wird, in der die Schnecke (18) einen vorbestimmten Punkt ($S_X$) zwischen dem Einspritz-Halte-Schaltpunkt ($S_A$) und dem Halte-Endpunkt ($S_B$) erreicht hat.

**Revendications**

1. Un procédé de détection d'un remplissage anormal pour un appareil de moulage par injection (11), dans lequel un processus de moulage est commandé par mesure du temps nécessaire pour qu'une vis (18) se déplace d'une distance prédéterminée, et dans lequel un signal d'événement anormal est envoyé dans le cas où le temps ($T_a$) ainsi mesuré est en dehors d'une plage autorisée ($T_{IS-L}$, $T_{IS-U}$) spécifiée, caractérisé par des étapes consistant à :
   mesurer le temps ($T_a$) nécessaire pour que la vis (18) se déplace d'une distance précise ($\Delta S_X$), comprenant au moins un processus de maintien, à partir d'un point de début d'injection ($S_O$), en passant par un point de commutation de maintien d'injection ($S_A$), jusqu'à un point de fin de maintien ($S_B$).

2. Le procédé de détection d'un remplissage anormal selon la revendication 1, dans lequel la mesure de temps débute à l'instant où la vis (18) est placée au niveau du point de commutation injection-maintien ($S_A$), et s'achève à l'instant où la vis (18) atteint le point de fin de maintien ($S_B$).

3. Le procédé de détection d'un remplissage anormal selon la revendication 1, dans lequel la mesure de temps débute à l'instant où la vis (18) est placée au niveau du point de début d'injection ($S_O$), et s'achève à l'instant où la vis (18) atteint le point de fin de maintien ($S_B$).

4. Le procédé de détection d'un remplissage anormal selon la revendication 1, dans lequel la mesure de temps débute à l'instant où la vis (18) est placée au niveau du point de commutation injection-maintien ($S_A$), et s'achève à l'instant où la vis (18) atteint le point ($S_X$) se trouvant entre le point de commutation injection-maintien ($S_A$) et le point de fin de maintien ($S_B$).

5. Le procédé de détection d'un remplissage anormal selon la revendication 1, dans lequel la mesure de temps débute à l'instant où la vis (18) est placée au niveau du point de début d'injection ($S_O$), et s'achève à l'instant où la vis (18) atteint le point ($S_X$) entre le point de commutation injection-maintien ($S_A$) et le point de fin de maintien ($S_B$).

FIG. 1

FIG. 2

FIG. 3

START

A — HOLDING TIME ALLOWABLE RANGE INPUT

B — MEASURING

C — $S_P = S_A$? — NO

YES

D — MEASUREMENT BY TIMER STARTED

E — $S_P = S_B$? — NO

YES

F — MEASUREMENT BY TIMER TERMINATED

G — Ta

H — $T_a < T_{IS-L}$ — YES — ABNORMALITIES IN CHECK VALVE AND/OR CAVITY ABNORMALITY OC-CURRENCE SIGNAL

ABNORMALITIES OCCURRED — I

NO

J — $T_a > T_{IS-U}$ — YES — ABNORMALILTIES IN CAVITY ABNORMALITY OC-CURRENCE SIGNAL

ABNORMALITIES OCCURRED — K

NO

NEXT SHOT

FIG. 4